(19) Europäisches Patentamt
European Patent Office
Office européen des brevets

(11) Veröffentlichungsnummer: **0 175 986**
**B1**

(12) **EUROPÄISCHE PATENTSCHRIFT**

(45) Veröffentlichungstag der Patentschrift: **14.03.90**

(21) Anmeldenummer: **85111289.6**

(22) Anmeldetag: **06.09.85**

(51) Int. Cl.$^{5}$: **C 08 L 83/04** // (C08L83/04, 23:30)

# (54) Gefüllte Organopolysiloxanmassen.

(30) Priorität: **08.09.84 DE 3433083**

(43) Veröffentlichungstag der Anmeldung: **02.04.86 Patentblatt 86/14**

(45) Bekanntmachung des Hinweises auf die Patenterteilung: **14.03.90 Patentblatt 90/11**

(84) Benannte Vertragsstaaten: **AT BE CH DE FR GB IT LI NL**

(56) Entgegenhaltungen:
**EP-A-0 093 918**
**DE-A-2 359 966**
**FR-A-2 256 231**
**GB-A-1 463 656**

**Die Akte enthält technische Angaben, die nach dem Eingang der Anmeldung eingereicht wurden und die nicht in dieser Patentschrift enthalten sind.**

(73) Patentinhaber: **Dietrich, Heinz J., Dr.**
**Branichstrasse 63**
**D-6905 Schriesheim (DE)**

(72) Erfinder: **Dietrich, Heinz J., Dr.**
**Branichstrasse 63**
**D-6905 Schriesheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 175 986 B1

Courier Press, Leamington Spa, England.

**Beschreibung**

Die vorliegende Erfindung betrifft modifizierte Organosilicium-Zusammensetzungen, insbesondere sowohl kalt als auch in der Hitze härtende Polyorganosiloxan-Massen, die mit oxydiertem Polyolefin gefüllt sind.

Die heute gebräuchlichen und üblichen bei Raumtemperatur vulkanisierenden Dichtungsmassen, sog. RTV-Massen zeichnen sich durch ihre lange Haltbarkeit, Dauerelastizität und ihr ästhetisches Assehen aus. Diese Massen, wie sie z.B. aus W. Noll, Chemie u. Technologie der Silicone, 2. Auflage, S. 339 ff. bekannt sind werden bevorzugt im Sanitärbereich, für Fensterabdichtungen und für hochbeanspruchte Baufugen eingesetzt.

Es gibt eine ganze Reihe von Vorschlägen, derartige Polysiloxanmassen durch sog. "Füllstoffe" zu modifizieren. Der Hauptvorteil derartiger Modifikationen liegt im wesentlichen im wirtschaftlichten Bereich, da die zum Einsatz kommenden Füllstoffe meist billige Massenprodukte darstellen. So ist vorgeschlagen worden, neben mineralischen Stoffen z.B. PVC, Polyacrylnitril, Polybutene, Polyethylene u.a. für den genannten Zweck einzusetzen [vgl. z.B. J. Falender, S. Lindsey, J. Saam. Polym. Eng. and Sci. *16*, 54 (1976); K. Marquardt, W. Keil, Gummi, Asbest, Kautschuk *1977*, 76; EP—A 0 012 825].

Die bis jetzt eingesetzten Füllstoffe stellen jedoch keine befriedigende Lösung dar. Zahlreiche Nachteile müssen in kauf genommen werden, so daß diese modifizierten Siliconmassen bis heute nur eine untergeordnete Rolle spielen.

Es war daher Aufgabe der vorliegenden Erfindung, modifizierte Siliconmassen bereitzustellen, die die genannten Nachteile nicht besitzen, sondern — trotz einem wirtschaftlichen Vorteil — qualitativ hochwertige Siliconmassen ergeben.

Gegenstand der vorliegenden Erfindung sind daher modifizierte, bei Raumtemperatur unter Einfluß von Feuchtigkeit zu Elastomeren vernetzende Siliconmassen enthaltend OH-endgestoppte Polyorganosiloxane, Vernetzersubstanzen, Katalysatoren, Füllstoffe sowie weitere übliche, an sich bekannte Zusatzstoffe, welche dadurch gekennzeichnet sind, daß die Siliconmassen bis zu 50 Gew.-% — bezogen auf die Gesamtmischung — oxydiertes Polyolefin enthalten. Bevorzugt werden 20 bis 40 Gew.-% eingesetzt.

Im Vergleich mit Silicondichtstoffen, welche mit Kunststoffen, z.B. pulverisiertes PVC, PAN, nicht vorbehandelte Polyolefine oder Mineralpulver zu einem vergleichbaren Volumenanteil verschnitten sind, besitzen die erfindungsgemäßen Dichtungsmassen eine erheblich verbesserte Extrudierbarkeit, z.B. bei der Verarbeitung aus Kartuschen. Dadurch ist es möglich, einen weit höheren Volumenanteil der Siliconmatrix durch den erfindungsgemäß eingesetzten Füllstoff zu ersetzen, als dies bei anderen Streckmitteln möglich ist.

Nach dem Aushärten zeigt der Dichtstoff überraschenderweise eine glatte, glänzende Oberfläche, während Dichtstoffe, die mit anderen Streckmitteln hoch gefüllt sind, oft eine stumpfe, manchmal narbige Oberfläche besitzen.

Im Gegensatz zu den oben erwähnten starren Füllstoffen kann man die erfindungsgemäß zugesetzten Polyolefinstreckmittel so wählen, daß sie selbst bei tiefen Temperaturen den Stauch-Dehnbewegungen, welchen ein Dichtstoff, z.B. in einer Fuge zwischen thermisch dimensionsveränderlichen Baustoffen ausgesetzt ist, leicht folgen können. Deswegen werden selbst bei einem Füllgrad von über 40 Vol.-% die hier erwünschten Eigenschaften (z.B. Weichheit, Dehnbarkeit) des Kautschuks nicht nachteilig verändert. Insbesondere kann auch die im Kautschuk um die Teilchen nicht vorbehandelter Polyolefine oder starren Streckmittel bei Dehnung des Kautschuks oft auftretende Vakuolenbildung vermieden werden, welche sich manchmal als sog. Weißbruch zu erkennen gibt. Andererseits kann man durch die Wahl eines harten, relativ hoch schmelzenden oxidierten Polyolefins eine verstärkende Füllwirkung erzielen, was sich als eine Verbesserung der Abrieb-, Zug- und Weiterreißfestigkeit des resultierenden Kautschuks auswirken kann. Diese Effekte sind besonders ausgeprägt, wenn man z.B. eine 150°C heiße Dispersion (Teilchengröße 10—20 µm) geschmolzenen, oxidierten Polyethylens in Silikonpolymer unter Scherwirkung auf eine Temperatur unterhalb des Schmelzpunktes bringt, wobei man das Polyolefin in Form von Stäbchen eines Durchmessers von 1—5 µm und Längen bis zu 120 µm erhalten kann.

Die zugesetzten Stabilisator-haltigen Polyolefine besitzen eine höhere Widerstandsfähigkeit gegen thermische Belastung, Bestrahlung und Witterungseinflüsse, als viele andere polymere Füllstoffe. Beispielsweise zersetzt sich eine PVChaltige Paste unter Verfärbung bereits bei einer Lagerung der Kartuschen bei 60—70°C, der entsprechende ausgehärtete Dichtstoff bei 90—110°C, selbst wenn dem PVC Stabilisatoren zugegeben werden. Demgegenüber wurde festgestellt, daß sich die Lagerfähigkeit der erfindungsgemäßen Pasten nicht von der unterscheidet, welche für nicht oder nur mineralisch gefüllte Silicondichtstoffe bekannt ist. Auch wurde festgestellt, daß der ausgehärtete Kautschuk Dauerbelastungen von 130—150°C oder durch intensive Bestrahlung verträgt, ohne daß eine größere Eigenschaftsänderung eintritt, als bei nicht oder mineralisch gefüllten Kautschuken.

Trotz des erfindungsgemäßen hohen Füllgrades bleiben andere, anwendungstechnisch wichtige Eigenschaften des Si-Kautschuks erhalten.

Als Ausgangskomponenten für das erfindungsgemäße System verwendet man im allgemeinen Siloxane, die zwei oder mehr Hydroxyl-Gruppen aufweisen. Diese Siloxandiole oder Siloxanpolyole werden in an sich bekannter Weise mit Silanen vernetzt, die im Falle von Diolen mindestens drei, im Falle von Polyolen mindestens zwei mit OH-Gruppen reaktionsfähige Gruppen aufweisen.

Als Vernetzer eignen sich mehrfunktionelle Organosiliciumverbindungen, die in der Lage sind, die OH-funktionellen Polysiloxane zu "vernetzen". Solche Organosiliciumverbindungen können sein:

a) $R_a SiX_{4-a}$.

a = 0 bis 2.

Hierbei kann R ein Alkyl, Alkenyl, Aryl oder entsprechend halogenierter Rest sein;

X ist eine reaktive Gruppe, die mit einer Silanolgruppe reagieren kann. Die reaktive Gruppe kann z.B. eine Alkoxy-, Acyloxy-, Amino-, Cycloamino-, Säureamid- oder Oximgruppe sein;

b) durch teilweise Hydrolyse entstandene Di-, Tri- und Polysiloxane der unter a) aufgeführte Silane wie z.B. das folgende Formelbild für ein Disiloxan zeigt:

$$R_a X_{3-a} Si—O—SiX_{3-a} R_a$$

Es eignen sich auch Verbindungen wie sie z.B. in DE—OS 1 794 197, DE—AS 1 121 803, DE—AS 1 224 093, DE—AS 1 260 140, DE—AS 1 301 140 oder US—PS 3 997 497 beschrieben sind.

Als weitere Zusatzstoffe kommen Katalysatoren, Haftmittel, Fungizide, Füllstoffe, Farb- oder Pigmentstoffe, Kettenverlängerungsmittel, inerte Polydimethylsiloxane u.a. in Frage. Derartige Zusatzstoffe sind aber an sich bekannt und werden z.B. in W. Noll, l.c. S. 343—347 beschrieben.

Die erfindungsgemäß zugesetzten oxydierten Polyolefine können z.B. oxydierte Polyethylenwachse, Polybutene, Copolymere des Ethylens und Propylens, Copolymere des Ethylens mit Vinylacetat oder Acrylaten oder Propylen oder deren Gemische sein. Bevorzugt werden z.B. oxydiertes ataktisches Polypropylen und ataktische Copolymere von Propylen und Ethylen eingesetzt. Ganz besonders bevorzugt ist oxydiertes ataktisches Polypropylen.

Die oxydative Behandlung der Polyolefine erfolgt in an sich bekannter Weise (vgl. z.B. A. Thalhofer, Kunststoffhandbuch IV, S. 161, C. Hanser Verlag, München, 1969).

Das Ausmaß und die Reaktionsbedingungen des oxidativen Abbaus sowie der Typ des eingesetzten Polyolefins beeinflussen in hohem Ausmaße die Eigenschaften der resultierenden Kautschuke. z.B. erwiesen sich im Falle des Polyethylens oxidierte Materialien mit Säurezahlen (gemäß DIN 52 402) von 5 bis über 60, insbesondere von 15 bis 30 als geeignet; für ataktisches Polypropylen dagegen wurden Säurezahlen ab 0.1 als ausreichend befunden.

Das Einmischen der oxidierten Polyolefine kann im Falle der höher schmelzenden Oxidate in Form feiner Pulver in der Kälte geschehen oder durch Dispergierung in der Silikonphase bei einer Temperatur oberhalb des Schmelzpunktes des Oxidates. Flüssige Oxidate bzw. deren Weichmacherhaltige Gemische können kalt dispergiert werden. Überraschenderweise ist ein Zusatz von Dispergierhilfen, z.B. pyrogenen Kieselsäuren oder Silanen zum Erreichen feiner Teilchengrößen meistens nicht nötig, trägt jedoch zur Stabilisierung der Dispersion bei. Eine Version des Verfahrens gestattet es, die Dispergierung und die Oxidation des Polyolefins gleichzeitig durchzuführen, indem das Polyolefin bei erhöhter Temperatur in einer Polydimethylsiloxanphase unter Hindurchleitung von Luft bei hoher Umlaufgeschwindigkeit eines Rührwerkzeuges bewegt wird.

Je nach erwünschten Eigenschaften erwies es sich als vorteilhaft, den Oxidaten neben Antioxidantien und UV-Absorbern 10—80%, vorzugsweise 25—35% Weichmacheröle, bezogen auf die Gesamtmenge des organischen Füllstoffs, zuzusetzen. In vielen Fällen wurde dabei beobachtet, daß im fertigen Kautschuk je nach Weichmachertyp eine Verschmierung der Oberfläche auftrat. Es war überraschend, daß diese Verschmierung sich weitgehend vermeiden läßt, wenn man einen Weichmacher verwendet, der sowohl mit der Oxidatphase, als auch mit der Silikonphase unbegrenzt oder zumindest anteilig mischbar ist. Beispiele für derartige Weichmacher sind Polybutene und Polyalkylenbenzole, insbesondere solche mit Verzweigungen der Alkylketten.

Die Erfindung soll nun anhand der folgenden Beispiele noch näher erläutert werden.

## Beispiel 1

1a) In einem mit Abstreifer versehenen Dissolver (Scheibendurchmesser 5 cm) wurde ein Gemisch von 450 Gewichtsteilen (Gwt) Polydimethylsiloxandiol einer Viskosität von ca. 50 Pa.s bei 20°, 180 Gwt Silikonöl (Visk. ca. 1 d Pa.s bei 20°), 250 Gwt oxidiertes Polyethylen (Säurezahl 23, Verseifungszahl 41, Dichte bei 20° 0,98 g/ml, Tropfpunkt 115—120°), 2 Gwt Stabilisator Pentaerythrityl-tetrakis [3-(3,5-di-tert.-butyl-4-hydroxyphenyl)-propionat] und 98 Gwt eines Polyalkylbenzols (Viskosität ca. 20 mPa.s bei 50°, Siedebereich ab 280°, Refraktion ($n_D^{20}$) 1.48, Dichte 0,87 g/ml) auf 160° erhitzt und während fünf Minuten bei 5000 Umdrehungen pro Minuten (U/M) dispergiert. Dei Teilchengröße des dispergierten Polyethylenoxidats betrug 10—20 µm. Nun wurde bei langsamer Umlaufgeschwindigkeit 20 Gwt einer pyrogenen Kieselsäure, BET-Oberfläche ca. 150 $m^2/g$ portionsweise zugegeben und nochmals 10 Min. bei 8000 U/M gerührt; Teilchengröße 5—15 µm.

1b) Nach Abkühlung wurden 920 Gwt der so erhaltenen Dispersion in einem Vakuumkneter mit 10 Gwt einer Pigmentpaste (bestehend aus 45 Gwt eines Silikonöls der Viskosität ca. 1 Pa.s bei 20°, 45 Gwt Titandioxid und 10 Gwt eines UV-Absorbers der Benzotriazolklasse), 30 Gwt des Vernetzers Ethyl-triacetoxy-silan und 5 Gwt des Haftverbesserers Diacetoxy-di-tert.-butoxy-silan während 5 Minuten vermischt, 35 Gwt der obigen Kieselsäure hinzugefügt und nochmals geknetet bis eine glatte, homogene Konsistenz erreicht war (ca. 10 Min.). Anschließend wurde 0,1 Gwt des

Katalysators Di-tert.-butyl-zinn-di-acetat zugegeben, 5 Min. unter Vakuum geknetet und in Kartuschen abgefüllt.

Beispiel 2

In der gleichen Apparatur wie (1a) wurde ein Gemisch von 420 Gwt Silikonpolymer und 190 Gwt Silikonöl aus Beispiel 1a mit 300 Gwt eines Copolymers des Butens mit Propen (Schmelzviskosität ca. 8 Pa.s bei 190°, Erweichungspunkt Ring/Kugel ca. 80° gemäß DIN 52 011) während 30 Min. bei Durchleiten eines langsamen Luftstromes bei 240° und 7000 U/Min gerührt, 78 Gwt des Polyalkylbenzols und 2 Gwt des Stabilisators aus Beispiel 1a zugegeben und auf 80° gekühlt.

Nun wurden 30 Gwt der pyrogenen Kieselsäure aus Beispiel 1a zugegeben und während 15 Min. bei 9000 U/Min dispergiert, wobei sich eine Teilchengröße von unter 15 µm einstelle. Die Compoundierung erfolgte gemäß Beispiel (1b).

Beispiel 3

Beispiel 2 wurde wiederholt mit der Änderung, daß die Compoundierung wie folgt formuliert wurde (Gwt): Dispersion, 800; Pigmentpaste, 20; Silikonöl, 37; Methyltricyclohexylaminosilan, 43; pyrogene Kieselsäure, 100.

Beispiel 4

In einem evakuierten Planetenmischer wurden 380 Gwt Silokonpolymer, 125 Gwt Silikonöl, 10 Gwt Pigmentpaste (gemäß Beispiel 1b) und 390 Gwt eines bei Raumtemperatur gießbaren Gemisches bestehend aus oxydiertem ataktischem Polypropylen (Säurezahl ca. 0.5, Verseifungszahl 4.0, Viskosität des Ausgangsproduktes ca. 6 Pa.s bei 190°, Erweichungspunkt des Ausgangsproduktes ca. 150°, Dauer der Oxidation 60 Min. bei 240°C), Stabilisator und Polyalkylbenzol (gemäß Beispiel 1a) im Verhältns 200:0,6:99,4 während 5 Min. gemischt, wobei sich eine grobe Dispersion mit Teilchengrößen bis zu 100 µm bildete.

Nun wurden 30 Gwt Vernetzer und 5 Gwt Haftmittel gemäß Beispiel 1b unter Vakuum während 5 Min. eingemischt, gefolgt von 60 Gwt pyrogener Kieselsäure. Während 10 Min. bildete sich eine glatte, glänzende Paste mit Teilchengrößen des organischen Füllstoffes von unter 5 µm. Weiter verfahren wurde wie Beispiel 1b. Spez. Gew. ca. 0,95 g/ml.

Beispiel 5

Beispiel 4 wurde wiederholt, mit der Zusammensetzung (gwt): Silikonpolymer, 290; Silkonöl, 85; Pigmentpaste, 10; organischer Füllstoff, 250; Vernetzer, 25; Haftmittel, 5; Kreide, 300; pyrogene Kieselsäure, 35. Spez. Gew. ca. 1,19 g/ml.

Beispiel 6

Beispiel 4 wurde wiederholt mit der Änderung, daß statt des Polyalkylbenzols ein Polyisobuten der Viskosität 15—20 mPa.s bei 23° verwendet wurde.

Beispiel 7

Beispiel 4 wurde wiederholt mit der Änderung, daß statt des ataktischen Polypropylens ein ataktisches Copolymer des Ethylens und Propylens (Viskosität über 50 Pa.s bei 190°, Erweichungspunkt ca. 140°) verwendet wurde.

Beispiel 8

In einem evakuierten Planetenmischer wurden 400 Gwt. Silikonpolymer, 150 Gwt. Silikonöl, 10 Gwt. Pigmentpaste (gemäß Beispiel 1b) und 350 Gwt. des gießbaren Gemisches, bestehend aus oxydiertem Polypropylen, Stabilisator und Alkylbenzol (gemäß Beispiel 4) während 5 Min. vermischt. Anschließend wurden 50 Gwt. eines Vernetzers des Typs modifiziertes N-Methylbenzamido-silan unter Vakuum während 5 Min. eingemischt, gefolgt von 50 Gwt pyrogener Kieselsäure. Innerhalb von 10 Min. bildete sich eine Dispersion mit Teilchengrößen des organischen Füllstoffes bis zu 25 µm. Nach Zugabe von 0,5 Gwt. des Katalysators Dibutylzinndiacetat wurde nochmals während 5 Min. unter Vakuum geknetet und in Kartuschen abgefüllt.

**Patentansprüche**

1. Modifizierte, bei Raumtemperatur unter Einfluß von Feuchtigkeit zu Elastomeren vernetzende Siliconmassen enthaltend OH-endgestoppte Polyorganosiloxane, Vernetzersubstanzen, Katalysatoren, Füllstoffe sowie weitere übliche, an sich bekannte Zusatzstoffe, dadurch gekennzeichnet, daß die Siliconmassen bis zu 50, insbesondere 30—40 Gew.-% — bezogen auf die Gesamtmischung — oxydiertes Polyolefin enthalten.

2. Siliconmassen gemäß Anspruch 1, dadurch gekennzeichnet, daß als oxydiertes Polyolefin oxydiertes ataktisches Polypropylen mit Säurezahlen ab 0,1 eingesetzt wird.

3. Siliconmassen gemäß Anspruch 1, dadurch gekennzeichnet, daß als oxydiertes Polyolefin oxydiertes Polyethylen mit Säurezahlen von 5 bis über 60 eingesetzt wird.

4. Siliconmassen gemäß Anspruch 1, dadurch gekennzeichnet, dass als oxydiertes Polyolefin oxydiertes Polyethylen mit Säurezahlen von 15 bis 30 eingesetzt wird.

5. Siliconmassen gemäß einem der Ansprüche 1 bis 3, dadurch gekennzeichnet, daß neben dem Polyolefin Weichmacher eingesetzt werden, die sowohl in der Polyolefin- als auch in der Siliconphase löslich sind.

**Revendications**

1. Les silicones liés, modifiés en Elastomères sous l'effet de l'humidité à température ambiante, et contenant de la Polyorganosiloxane au stade OH, des substances de liaison, des catalyseurs, des matières de remplissage ainsi que d'autres additifs usuels et connus, sont caractérisés par le fait qu'ils contiennent jusqu'à 50% et plus généralement 30 à 40% en poids (représentant le mélange total) de Polyolefine oxydé.

2. Conformément à la revendication 1, les silicones sont caractérisés par le fait que, ils contiennent des Polypropylènes atactiques oxydés ayant un coefficient d'acidité de 0,1 au moins, au lieu de Polyoléfine oxydé.

3. Les silicones conformément à la revendication 1, sont caractérisés par le fait que, ils contiennent des Polyéthylènes oxydés ayant un coefficient d'acidité de 5 à plus de 60, au lieu de Polyolefine oxydé.

4. Les silicones conformément à la revendication 1, sont caractérisés par le fait que, ils contiennent du Polyéthylène oxydé ayant un coefficient d'acidité de 15 à 30, au lieu de Polyoléfine oxydé.

5. Les silicones conformément à l'une des revendications 1 à 3, sont caractérisés par le fait que, à côté du Polyoléfine se trouvent des adoucisseurs qui sont solubles tant dans la phase Polyoléfine que dans la phase silicone.

**Claims**

1. Modified silicone compositions which are vulcanizeable to form elastomers at room temperature under the influence of moisture, containing OH-terminated polyorganosiloxanes, crosslinking agents, fillers, as well as additional, commonly known additives, characterized in that the silicone compositions contain up to 50, but preferably 30—40% by weight — based on the weight of the total mixture — of oxidized polyolefins.

2. Silicone compositions according to claim 1 characterized by the employment of oxidized, atactic polypropylene with acid numbers from 0.1 upwards as the oxidized polyolefin.

3. Silicone compositions according to claim 1 characterized by the employment of oxidized polyethylene with acid numbers from 5 to over 60 as the oxidized polyolefin.

4. Silicone compositions according to claim 1 characterized by the employment of oxidized polyethylene with acid numbers of 15 to 30 as the oxidized polyolefin.

5. Silicone compositions according to claim 1 characterized by the employment of a plasticizer in addition to the polyolefin, which is soluble in the polyolefin- as well as in the siliconephase.